# EUROPÄISCHE PATENTSCHRIFT

(11) **EP 0 613 922 B1**
(45) Veröffentlichungstag und Bekanntmachung des Hinweises auf die Patenterteilung: **10.01.1996**
(21) Anmeldenummer: 94102476.2
(22) Anmeldetag: 18.02.1994
(51) Int. Cl.: C08J 11/00, C08L 75/04

(54) **Verfahren zur Wiederverwertung von Lackabfällen**
Process for reusing lacquer wastes
Procédé pour réutiliser les résidus de laques

(30) Priorität: 03.03.1993 DE 4306614
(43) Veröffentlichungstag der Anmeldung: 07.09.1994
(73) Patentinhaber: BAYER AG, D-51368 Leverkusen (DE)
(72) Erfinder: Hovestadt, Wieland, Dr., D-47802 Krefeld (DE); Brück, Jochen, Dr., D-51061 Köln (DE); Blum, Harald, Dr., D-47669 Wachtendonk (DE)

(56) Entgegenhaltungen:
- EP-A- 0 168 625
- US-A- 4 220 456

## Beschreibung

Die Erfindung betrifft ein Verfahren zur Wiederverwertung von beim Verspritzen von wasserverdünnbaren 2-Komponenten-Polyurethanlacken anfallendem "Overspray". Der Begriff "Overspray" soll hierbei diejenigen Lackbestandteile umfassen, die beim Verspritzen des Lacks nicht auf das zu beschichtende Substrat treffen und damit ohne besondere Vorkehrungen verloren sind.

Lösungsmittelhaltige 2-Komponenten-Polyurethanlacke haben aufgrund ihrer hervorragenden Eigenschaften eine große praktische Bedeutung gewonnen. In jüngerer Zeit wurde bekannt, ausgewählte polyhydroxylacrylate (EP-B-0 358 979) oder ausgwählte Polyhydroxylpolyester (EP-A-0 496 205) mit Polyisocyanaten, die freie Isocyanatgruppen aufweisen, zu wäßrigen 2-Komponentensystemen zu kombinieren. Diese Beschichtungsmittel weisen eine Topfzeit von mehreren Stunden auf und harten zu hochwertigen, vernetzten Filmen aus, die bezüglich ihres Eigenschaftsniveaus mit den bislang aus lösungsmittelhaltigen 2-Komponenten-Polyurethanlacken erhaltenen Lackfilmen vergleichbar sind.

Die Lacke werden in der Praxis in der Regel durch Spritzen auf die zu beschichtenden Substrate aufgetragen. Hierbei kann nicht vermieden werden, daß durch "Overspray" nennenswerte Mengen des eingesetzten Beschichtungsmittels verloren gehen. In der Praxis werden diese überschüssigen Mengen im allgemeinen mit Hilfe von Wasser aus der Abluft der Beschichtungsanlage ausgewaschen und unter Mitverwendung von Koagulierungsmitteln, wie beispielsweise oberflächenaktivem, anorganischem Material, wie Tonerde, zur Koagulation gebracht. Dieser "Lackschlamm" konnte bislang keiner sinnvollen Wiederverwendung zugeführt werden.

In jüngerer Zeit wurden Verfahren zur abfallfreien Spritzlackierung mit wasserverdünnbaren 1-Komponenten-Systemen entwickelt. In JOT 3/1992 S. 34 - 39 werden Scheiben oder Bänder vorgestellt, die hinter dem Spritzgut angebracht werden. Der auftreffende "Overspray" wird kontinuierlich abgestreift, in Behältern gesammelt, mit Wasser erneut auf Spritzviskosität eingestellt und kann wieder eingesetzt werden. In EP-A-0 508 107 wird eine Möglichkeit zur Wiedergewinnung des "Oversprays" wasserverdünnbarer, lufttrocknender Lacke in einer Beschichtungsanlage mit Wasserauswaschung beschrieben. Der durch das Wasser der Anlage verdünnte Lack verändert sich chemisch nicht und wird mittels Ultrafiltration wieder auf den Originalfestkörpergehalt aufkonzentriert.

Die DE-OS 4 138 088 beschreibt, daß die Ultrafiltration auch für die Aufkonzentration des "Oversprays" von wasserverdünnbaren 2-Komponenten-Polyurethansystemen mit langer Topfzeit geeignet ist, wenn Polymerisationsverzögerer zugesetzt werden. Da die Vernetzungsreaktion wasserverdünnbarer 2-Komponenten-Polyurethansysteme bei Raumtemperatur weiter fortschreitet, ist das aufgearbeitete System nicht lagerstabil, sondern verändert sich kontinuierlich. Mit erheblichen Qualitatsschwankungen muß gerechnet werden.

Es war daher die der Erfindung zugrundeliegende Aufgabe, ein Verfahren zu entwickeln, welches die Aufarbeitung des "Oversprays" aus wäßrigen 2-Komponenten-Polyurethansystemen zu neuen, lagerstabilen Beschichtungsmitteln ermöglicht, bevor dieser aufgrund der allmählich fortschreitenden Vernetzungsreaktion völlig unbrauchbar geworden ist.

Es wurde jetzt gefunden, daß der "Overspray" von Lacken, bestehend im wesentlichen aus einem Gemisch aus
a) organischen Polyisocyanaten,
b) einer wäßrigen Lösung oder Dispersion organischer Polyhydroxylverbindungen,
und
c) gegebenenfalls Pigmenten und/oder sonstigen Lackhilfsmitteln,
wiederverwertet werden kann, wenn der "Overspray" mit Verbindungen zur Reaktion gebracht wird, welche gegenüber Isocyanatgruppen eine höhere Reaktivität als die acide Wasserstoffatome enthaltenden Reaktionspartner der Polyisocyanate und als Wasser aufweisen.

Im Fall von Beschichtungsanlagen mit Wasserauswaschung werden diese Verbindungen vorzugsweise im Wasser der Anlage gegebenenfalls durch Einsatz von Emulgatoren gelöst oder dispergiert. Die modifizierten Lacke können durch übliche Verfahren, wie Ultrafiltration oder Niederdruckverdampfung, aufkonzentriert werden. Im Falle von Anlagen mit Scheiben oder Bändern, wie oben beschrieben, wird die Reaktion vorzugsweise in den Auffangbehältern durchgeführt.

Die so erhaltene wäßrige Lösung oder Dispersion des chemisch modifizierten "Overspray" kann je nach Art der vorgenommenen chemischen Modifizierung als Bestandteil eines wasserverdünnbaren 2-Komponenten-Polyurethanlacks, als unter dem Einfluß von Hitze vernetzbarer, wasserverdünnbarer 1-Komponenten-Lack, als physikalisch trocknender 1-Komponenten-Lack oder als Bestandteil derartiger Lacke wiederverwendet werden.

Gegenstand der Erfindung ist ein Verfahren zur Wiederverwertung des beim Verspritzen von wasserverdünnbaren 2-Komponenten-Polyurethanlacken auf Basis von organischen Polyisocyanaten und von organischen Polyhydroxylverbindungen anfallenden "Overspray", dadurch gekennzeichnet, daß man
- (i): den "Overspray", gegebenenfalls unter gleichzeitiger Verdünnung mit Wasser sammelt,
- (ii): den "Overspray" gleichzeitig oder im Anschluß an die Verfahrensstufe (i), gegebenenfalls unter Mitverwendung von Emulgatoren mit einer solchen Menge an Verbindungen zur Reaktion bringt, welche gegenüber Isocyanatgruppen eine höhere Reaktivität aufweisen als Wasser und als die in den 2-Komponenten-Polyurethanlacken mitverwendeten Polyhydroxylverbindungen, die einem Äquivalentverhältnis von gegenüber Isocyanatgruppen im Sinne dieser Ausführungen hochreaktiven Gruppen zu Isocyanatgruppen des "Overspray" von 0,5 : 1 bis 50 : 1 entsprechen, und
- (iii): die so erhaltene wässrige Lösung oder Dispersion des chemisch modifizierten "Overspray", gegebenenfalls nach Entfernung eines Teils des Wassers oder Zugabe von weiterem Wasser zwecks Einstellung auf Spritzviskosität und gegebenenfalls nach Zusatz von weiteren Hilfs- und Zusatzmitteln als ein- oder mehrkomponentig chemisch und/oder physikalisch trocknendes Beschichtungsmittel oder Teil eines derartigen Beschichtungsmittels wiederverwendet.

Die Polyisocyanatkomponente in derartigen 2-Komponenten-Polyurethanlacken besteht, vorzugsweise aus sogenannten Lackpolyisocyanaten, d.h. aus Biuret-, Isocyanurat-, Urethan-, Allophanat- und/oder Uretdiongruppen aufweisenden Derivaten von einfachen Diisocyanaten wie insbesondere 1,6-Diisocyanatohexan oder Gemischen von 1,6-Diisocyanatohexan mit 1-Isocyanato-3,3,5-trimethyl-5-isocyanatomethylcyclohexan und/oder, weniger bevorzugt, auf Basis von aromatischen Diisocyanaten, wie 2,4-und/oder 2,6-Diisocyanatotoluol. Diese Polyisocyanate werden z.B. in DE-OS 4 137 429 beschrieben. Bei einer mittleren NCO-Funktionalität von 2,2 bis 5,0 weisen sie bei 23°C im allgemeinen eine Viskosität von 50 bis 10.000, vorzugsweies 50 bis 2.000 mPa.s auf. Der Gehalt an Diisocyanat liegt unter 0,5 Gew.-%.

In vielen Fällen ist der Einsatz von hydrophilierten Polyisocyanaten besonders empfehlenswert. Hiermit wird die Emulgierung des Polyisocyanats in die wäßrige Phase erleichtert und in einigen Fällen eine zusätzliche Erhöhung der Standzeit bewirkt. Solche hydrophilierten Polyisocyanate (vgl. z.B. DE-OS 4 137 429) werden z.B. durch Umsetzung von Di- oder Polyisocyanaten mit monofunktionellen Polyethern aus Ethylenoxid und gegebenenfalls Propylenoxid und/oder durch Einbau von Carboxylatgruppen durch Umsetzung mit Hydroxylgruppen enthaltenden Carbonsäuren, z.B. 2,2-Dimethylolpropionsäure oder Hydroxypivalinsäure und deren Neutralisation vor oder nach der Umsetzung, erhalten.

Falls erforderlich, können die Polyisocyanate in-Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird jedoch so bemessen, daß in den letztendlich erhaltenen 2-Komponenten-Polyurethanlacken maximal 20 Gew.-% Lösungsmittel, bezogen auf die Menge an Wasser, vorliegen.

Bei den gegenüber Isocyanatgruppen reaktionsfähigen Reaktionspartnern der 2-Komponenten-Polyurethanlacke handelt es sich vor allem um die an sich bekannten höhermolekularen Polyhydroxylverbindungen mit einem Hydroxylgruppengehalt von 0,1 bis 10 Gew.-%. Sie werden z.B. in der DE-OS 4 137 429, DE-OS 3 829 587 oder in EP-A-o 496 205 beschrieben. Die Wasserverdünnbarkeit dieser Harze wird, falls erforderlich, durch Einbau von ionischen Gruppen wie z.B. Sulfonat- und insbesondere Carboxylatgruppen bzw. durch Mitverwendung von externen Emulgatoren sichergestellt. Beispiele für derartige, Hydroxylgruppen aufweisende Harze sind die an sich bekannten Polyester-, Polyether-, Polyacrylat-, Polyesterurethan-, Polyurethan- oder Polydienharze oder deren Gemische.

Zur Herstellung der gebrauchsfertigen Bindemittel wird im allgemeinen die Polyisocyanatkomponente in der wässrigen Lösungen bzw. Dispersion der Polyhydroxylkomponente emulgiert, wobei die Mengenverhältnisse der Reaktionspartner einem NCO/OH-Äquivalentverhältnis von 0,2:1 bis 5:1, vorzugsweise 0,5:1 bis 2:1 entsprechen.

Die erfindungsgemäß in Betracht kommenden 2-Komponenten-Polyurethanlacke können neben den genannten Bindemittelkomponenten und dem die kontinuierliche Phase darstellenden Wasser die üblichen Hilfsmittel wie beispielsweise Pigmente, Füllstoffe, Verlaufsmittel, Glanzverbesserer, Antiabsetzmittel, Verdicker, Thixotropiemittel, Antioxidantien, Hitzestabilisatoren, Entschäumungsmittel, Emulgatoren und dergleichen enthalten. Die Anwesenheit derartiger Hilfs- und Zusatzmittel haben auf das erfindungsgemäße Wiederverwertungsverfahren keinen Einfluß, da sie in der Regel ebenfalls zurückgewonnen werden und so in den wiedergewonnenen Beschichtungsmitteln erneut zum Einsatz gelangen, soweit sie in dem aufzuarbeitenden "Overspray" vorlagen.

Bei den in der Verfahrensstufe (ii) eingesetzten Verbindungen mit gegenüber Isocyanatgruppen reaktionsfähigen Gruppen handelt es sich vorzugsweie um im Sinne der Isocyanat-Additionsreaktion monofunktionelle Verbindungen, die gegenüber Isocyanatgruppen eine höhere Reaktionsbereitschaft aufweisen als Wasser und die in 2-Komponenten-Polyurethanlacken eingesetzten Reaktivkomponenten, insbesondere die genannten Polyhydroxylverbindungen. In Betracht kommen primäre oder sekundäre Monoamine mit aliphatisch gebundenen Aminogruppen mit 1 bis 36, vorzugsweise 1 bis 19 Kohlenstoffatomen, wie beispielsweise Methylamin, Ethylamin, n-Butylamin, Isobutylamin, n-Pentylamin, n-Hexylamin-, n-Stearylamin, Dimethylamin, Diethylamin, Di-n-propylamin, Di-n-butylamin, Di-n-pentylamin, Di-n-hexylamin, Diisopropylamin, N-Methyl-n-stearylamin, Di-n-stearylamin, Cyclohexylamin, Piperidin, Pyrrolidon oder Morpholin. Auch höhermolekulare Verbindungen, die eine primäre oder sekundäre Aminogruppe aufweisen und ansonsten, zumindest in erster Näherung, gegenüber Isocyanatgruppen inert sind, können im Prinzip in der Verfahrensstufe (ii) eingesetzt werden, obwohl dies im Vergleich zu den genannten, einfachen Monoaminen weniger bevorzugt ist. Ebenfalls geeignet, jedoch weniger bevorzugt sind aromatische primäre und sekundäre, monofunktionelle Amine.

Im Falle der Verwendung von derartigen Monoaminen entstehen beim erfindungsgemäßen Verfahren Gemische von wasserverdünnbaren Bindemittelbestandteilen, die beispielsweise in oder als Reaktivkomponente(n) für organische Polyisocyanate eingesetzt werden können. Im Falle der Verwendung von leicht flüchtigen Monoaminen stellen diese den nachstehend genannten Verbindungen vergleichbare Blockierungsmittel dar, so daß die letztendlich erhaltenen Gemische auch in oder als Einbrennlacke(n) eingesetzt werden können, bei deren Aushärtung die Monoamine wie Blockierungsmittel abgespalten werden und verdunsten.

Eine weitere Gruppe von Verbindungen mit gegenüber Isocyanatgruppen reaktionsfähigen Gruppen, die in der Verfahrensstufe (ii) zum Einsatz gelangen können, sind monofunktionelle Blockierungsmittel, wie insbesondere Oxime, vorzugsweise (cyclo)aliphatische Ketoxime mit 3 bis 6 Kohlenstoffatomen wie beispielsweise Aceton-, Butanon- oder Cyclohexanonoxim. Im Falle der Verwendung von derartigen Verbindungen entstehen beim erfindungsgemäßen Verfahren letztendlich wasserverdünnbare Bindemittelgemische, die als Einbrennlacke oder zu deren Herstellung verwendet werden können.

Eine weitere Gruppe von Verbindungen, die in der Verfahrensstufe (ii) eingesetzt werden können, sind Aminoalkohole, die wegen der extrem unterschiedlichen Reaktivität der Amino- und Hydroxylgruppen in erster Näherung als "im Sinne der Isocyanat-Additionsreaktion monofunktionell" bezeichnet werden können, insbesondere dann, wenn sie in solchen Mengen eingesetzt werden, daß auf jede Isocyanatgruppe mindestens eine Aminogruppe entfällt. Beispiele derartiger Aminoalkohole sind solche mit 2 bis 8 Kohlenstoffatomen wie 2-Aminoethanol, 2-(Methylamino)-ethanol, Diethanolamin, 3-Amino-1-propanol, 1-Amino-2-propanol, Diisopropanolamin, 2-Amino-2-methyl-propanol, 2-Amino-2-methyl-1,3-propandiol, 2-Amino-2-hydroxymethyl-1,3-propandiol, Dibutanolamin oder deren Gemische. Ebenfalls geeignet, jedoch weniger bevorzugt, sind auch höhermolekulare Verbindungen, die eine primäre oder sekundäre Aminogruppe und zusätzlich eine oder mehrere alkoholische Hydroxylgruppen enthalten.

Im Falle der Verwendung von derartigen Aminoalkoholen resultieren letztendlich Gemische wasserverdünnbarer Polyhydroxylverbindungen, die beispielsweise erneut als Polyolkomponente in 2-Komponenten-Polyurethanlacken Verwendung finden können.

Als Verbindung mit gegenüber Isocyanatgruppen reaktionsfähigen Gruppen, die in der Verfahrensstufe (ii) eingesetzt werden können, kommen weiterhin Verbindungen in Betracht, die neben einer gegenüber Isocyanatgruppen hochreaktiven Gruppe eine Carboxylat- oder Sulfonatgruppe aufweisen. Beispiele derartiger Verbindungen sind insbesondere die Alkalisalze von Aminocarbonsäuren oder Aminosulfonsäuren. Die Verwendung derartiger Verbindungen kann in besonderen Fällen zu einer verbesserten Wasserdispergierbarkeit der aufgearbeiteten Bindemittelgemische führen.

Ebenfalls geeignet sind Mischungen der oben genannten und gegebenenfalls anderer Verbindungen, die gegenüber Isocyanatgruppen eine höhere Reaktivität aufweisen als Wasser und die in dem 2-Komponenten-Polyurethanlack eingesetzte Reaktivkomponente.

Besonders bevorzugte Verbindungen mit gegenüber Isocyanatgruppen reaktionsfähigen Gruppen, die in der Verfahrensstufe (ii) eingesetzt werden können, sind die beispielhaft genannten, wasserlöslichen, sekundären Monoamine, Oxime und Aminoalkohole.

Ist die Verbindung mit gegenüber Isocyanatgruppen reaktionsfähigen Gruppen, die in der Verfahrensstufe (ii) zum Einsatz gelangt, in Wasser unlöslich, so kann sie durch herkömmliche Emulgatoren des anionischen, kationischen oder nichtkationischen Typs in eine wasserlösliche oder -dispergierbare Form überführt werden.

Geeignete Emulgatoren sind nichtionische oder anionische Tenside, wie z.B.
1. Alkylsulfate, besonders solche mit einer Kettenlänge von 8 bis 18 C-Atomen, Alkyl- und Alkylarylethersulfate mit 8 bis 18 C-Atomen im hydrophoben Rest und 1 bis 40 Ethylen- bzw. Propylenoxideinheiten, und/oder
2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertgigen Alkoholen oder Alkylphenolen mit 4 bis 15 C-Atomen im Alkylrest; gegebenenfalls können diese Alkohole oder Alkylphenole auch mit 1 bis 40 Ethylenoxid-(EO-)Einheiten ethoxyliert sein, und/oder
3. Phosphorsäureteilester und deren Alkali- und Ammoniumsalze, besonders Alkyl- bzw. Alkylarylphosphonate mit 8 bis 20 C-Atomen im organischen Rest, Alkylether bzw. Alkylaryletherphosphate mit 8 bis 20 C-Atomen im Alkyl- bzw. Alkylarylrest und 1 bis 40 EO-Einheiten, und/oder
4. Alkylpolyglykolether bevorzugt mit 8 bis 40 EO-Einheiten und Alkylresten von 8 bis 20 C-Atomen, und/oder
5. Alkylarylpolyglykolether bevorzugt mit 8 bis 40 EO-Einheiten und 8 bis 20 C-Atomen in den Alkyl- und Arylresten, und/oder
6. Ethylenoxid/Propylenoxid (EO/PO)-Blockcopolymere bevorzugt mit 8 bis 40 EO-Einheiten, und/oder
7. Ammonium-Amphiphile mit einer Kettenlänge von 4 bis 15 C-Atomen in den Alkylresten und Gemische dieser und/oder anderer Emulgatoren bzw. oberflächenaktiver Substanzen.

Bei allen Varianten des erfindungsgemäßen Verfahrens kommen die gegenüber Isocyanatgruppen im Sinne der oben gemachten Ausführungen hochreaktiven Verbindungen in solchen Mengen zum Einsatz, die einem Äquivalentverhältnis von gegenüber Isocyanatgruppen im Sinne der oben gemachten Ausführungen hochreaktiven Gruppen zu Isocyanatgruppen des "Overspray" von 0,5:1 bis 50:1, vorzugsweise 0,9:1 bis 10:1 und insbesondere 0,9:1 bis 2:1 entsprechen.

In einer bevorzugten Ausführungsform des erfindungsgemäßen Verfahrens wird die Verbindung mit gegenüber Isocyanatgruppen hochreaktiven Gruppen in Beschichtungsanlagen mit Wasserauswaschung im Wasser der Beschichtungsanlage gelöst bzw. emulgiert. Der eingetragene "Overspray" reagiert mit der Verbindung und bleibt im Wasser der Beschichtungsanlage gelöst bzw. emulgiert. Der Verbrauch der Verbindung mit gegenüber Isocyanatgruppen reaktionsfähigen Gruppen kann kontinuierlich oder diskontinuierlich durch Nachdosieren ausgeglichen werden. Sobald im Wasser der Beschichtungsanlage ein Festkörpergehalt von 0,5 bis 25 Gew.-%, vorzugsweise 1 bis 10 Gew.-% erreicht ist, wird der "Overspray" durch übliche Verfahren, wie Ultrafiltration oder Niederdruckverdampfung, auf eine Viskosität von 50 bis 20.000, vorzugsweie 100 bis 5.000 mPa.s bei 23°C, aufkonzentriert. Das hierbei gewonnene Wasser kann der Beschichtungsanlage wieder zugeführt werden.

In einer weniger bevorzugten Ausführungsform wird die Verbindung mit gegenüber Isocyanatgruppen hochreaktiven Gruppen nicht im Wasser der Beschichtungsanlage gelöst. Die Reaktion mit den Isocyanatgruppen des "Lackoversprays" findet in einem separaten Reaktionsgefäß statt, sobald im Wasser der Beschichtungsanlage ein Festkörpergehalt von 0,5 bis 25 Gew.-%, vorzugsweise 1 bis 10 Gew.-% erreicht ist. Dabei darf die Zeit zwischen dem Herstellen des Lackes und der Reaktion zwischen der Verbindung mit gegenüber Isocyanatgruppen reaktionsfähigen Gruppen und dem "Overspray" je nach Tropf zeit des verwendeten 2-Komponenten-Polyurethanlackes 2 bis 48, vorzugsweise 2 bis 10 Stunden, nicht überschreiten.

In Beschichtungsanlagen mit Scheiben oder Bändern wird der auf die Scheiben oder Bänder auftreffende "Overspray", eventuell unter Benetzung mit Wasser, kontinuierlich abgestreift und in Auffangbehältern gesammelt. In diesen Behältern befindet sich eine 0,001 bis 10%ige wäßrige Lösung bzw. Emulsion der Verbindung mit gegenüber Isocyanatgruppen reaktionsfähigen Gruppen. Die Aufarbeitung zu einem wasserverdünnbaren Beschichtungsmittel erfolgt entweder durch Aufkonzentration, wie oben beschrieben, oder bei zu hohen Viskositäten durch Verdünnen mit Wasser.

Die so erhaltenen wäßrigen Lösungen bzw. Dispersionen des chemisch modifizierten "Overspray" können beispielsweise in Kombination mit frischen Lackpolyisocyanaten als 2-Komponenten-Polyurethanlack oder in Abmischung mit anderen wasserverdünnbaren Polyhydroxylverbindungen und/oder mit weiteren Hilfs-und Zusatzmitteln als gegebenenfalls Hilfs- und Zusatzmitel enthaltende Polyhydroxylkomponente in 2-Komponenten-Polyurethanlacken wiederverwendet werden. Hierbei können evtl. während der Aufarbeitung verlorengegangene Bestandteile, wie z.B. Amine zur Regulierung des pH-Wertes, wieder zugefügt werden. Die Beschichtungsmittel eignen sich für die gleichen Anwendungen wie die Originalbindemittel.

Wurden in Verfahrensstufe (ii) als Verbindung mit gegenüber Isocyanatgruppen reaktionsfähigen Gruppen in der Wärme wieder abspaltbare Verbindungen wie sekundäre Amine oder Oxime eingesetzt, so kann der aufgearbeitete, chemisch modifizierte "Overspray" als oder in Einbrennlacken wiederverwendet werden.

Der aufgearbeitete, chemisch modifizierte "Overspray" kann auch mit Aminovernetzerharzen und/oder blockierten Polyisocyanaten versetzt und in oder als Einbrennbeschichtung(en) verwendet werden.

Ebenfalls möglich, aber weniger bevorzugt, ist die Verwendung in oder als physikalisch trocknende(n) Beschichtungsmittel(n).

In den nachfolgenden Beispielen beziehen sich alle Prozentangaben auf Gewichtsprozente.

### Beispiele

### Ausgangsmaterialien:

### Polyol 1:

Wäßrige Dispersion eines durch radikalische Polymerisation nach DE-OS 3 829 587 hergestellten Polyacrylatharzes aus 459 Teilen Hydroxyethylmethacrylat, 231 Teilen Methylmethacrylat, 600 Teilen n-Butylacrylat und 150 Teilen Acrylsäure. Die mit Ammoniak neutralisierte Dispersion hat bei einem Festgehalt von 26 % einen OH-Gehalt von 1,1 %.

### Polyol 2:

Wäßrige Dispersion eines durch Polykondensation hergestellten Polyesterpolyols nach DE-OS 4 137 429 aus 152 Teilen Hexandiol, 130 Teilen Neopentylglykol, 50 Teilen Cyclohexandimethanol, 164 Teilen Trimethylolpropan, 279 Teilen Phthalsäureanhydrid, 225 Teilen Hexahydrophthalsäureanhydrid und 107 Teilen Tetrahydrophthalsäuranhydrid. Die mit Triethylamin neutralisierte Dispersion hat bei einem Festgehalt von 38 % einen OH-Gehalt von 3,5 %.

### Polyisocyanat 1:

Isocyanuratgruppen-haltiges Polyisocyanat auf Basis Hexamethylendiisocyanat nach DE-OS 4 136 618 modifiziert mit einem Polyethylenoxidpolyether mit einem mittleren Molekulargewicht von 350. Der NCO-Gehalt des wasserverdünnbaren Polyisocyanates 1 beträgt 17,3 %, der Gehalt an Ethylenoxideinheiten 11,3 % und die Viskosität bei 23°C 3050 mPa.s.

### Polyisocyanat 2:

Gemisch aus 70 Gew.-Teilen eines Uretdiongruppen aufweisenden, also dimerisierten Hexamethylendiisocyanats mit zwei endständigen, freien NCO-Gruppen und 30 Gew.-Teilen des im wesentlichen zum N,N',N"-Tris(6-isocyanatohexyl)-isocyanurat trimerisierten Hexamethylendiisocyanats im Gemisch mit untergeordneten Mengen an höheren Homologen beider Produkte; Polyisocyanat 2 weist eine durchschnittliche Viskosität von 200 mPa.s/23°C und einen durchschnittlichen Gehalt an freien NCO-Gruppen von 22,5 % auf.

### Beispiel 1

In einer Kabine mit Wasserabscheidung wird 1 kg Lack verspritzt. Es handelt sich um einen wasserverdünnbaren Klarlack mit einem Festkörpergehalt von 30 %, dessen Bindemittel aus einer Kombination von Polyisocyanat 1 mit Polyol 1 im NCO/OH-Verhältnis von 1,5:1 besteht. Vor dem Spritzen wurden in dem Kabinenwasser 60 g Diisopropylamin gelöst. Dies entspricht der 1,1-fach äquivalenten Menge des Amins, bezogen auf die Isocyanatgruppen des Polyisocyanats.

Nach Beendigung des Spritzvorgangs wird der durch das Wasser der Beschichtungsanlage verdünnte "Overspray" durch Wasserstrahlvakuum bei 60°C wieder auf einen Festkörpergehalt von 30 % aufkonzentriert. Die so erhaltene wäßrige Dispersion ist über mehrere Monate lagerstabil.

Die Dispersion wird mit einer, bezogen auf die Hydroxylgruppen 1,5-fach molaren Menge Polyisocyanat 1 versetzt und als 2-Komponenten-Polyurethanlack auf ein Prüfblech per Spritzauftrag aufgetragen. Nach Aushärtung bei Raumtemperatur erhält man einen klaren, vernetzten, lösemittelbeständigen Lackfilm.

### Beispiel 2

Man verfährt wie in Beispiel 1 beschrieben. Die wäßrige Dispersion des beschriebenen Bindemittels wird als 1-Komponenten-Polyurethansystem appliziert und 30 Minuten bei 160°C eingebrannt. Man erhält einen klaren, vernetzten, lösemittelbeständigen Lackfilm.

### Beispiel 3

Man verfährt wie in Beispiel 1 angegeben, unter Verwendung der gleichen Menge des gleichen Lacks. Vor dem Verspritzen wurden in dem Kabinenwasser 30 g Diisopropylamin und 25 g N-Methylaminoethanol gelöst. Die Aufarbeitung erfolgt wie in Beispiel 1.

Das so wiedergewonnene Bindemittel wird mit einer, den vorliegenden Hydroxylgruppen äquivalenten Menge Polyisocyanat 1 versetzt und auf ein Prüfblech appliziert. Nach Aushärtung bei Raumtemperatur erhält man einen klaren, vernetzten, lösemittelbeständigen Lackfilm.

### Beispiel 4

Man verfährt gemäß Beispiel 1, jedoch unter Verwendung einer äquivalenten Menge Polyol 2 anstelle des Polyols 1.

Das wiedergewonnene Bindemittel wird als 1-Komponenten-System appliziert und 30 Minuten bei 160°C eingebrannt. Man erhält einen klaren, vernetzten, lösemittelbeständigen Lackfilm.

### Beispiel 5

Man verfährt wie in Beispiel 1 beschrieben unter Verwendung von Polyol 1, jedoch in Kombination mit einer entsprechenden Menge Polyisocyanat 2. Vor dem Spritzen wurden in dem Kabinenwasser 30 g Diisopropylamin und 30 g N-Methyltaurin gelöst.

Das wiedergewonnene Bindemittel wird mit einer, bezogen auf die Hydroxylgruppen 1,5-fach molaren Mengen an dem oben beschriebenen Polyisocyanat versetzt und als 2-Komponenten-Polyurethanlack auf ein Prüfblech appliziert. Nach Aushärtung bei Raumtemperatur erhält man einen klaren, vernetzten, lösemittelbeständigen Lackfilm.

### Beispiel 6

In einer Kabine bei der hinter dem Werkstück eine rotierende Scheibe angebracht ist, wird 1 kg des Lackes aus Beispiel 1 verspritzt. Der "Overspray" wird kontinuierlich von der Scheibe abgestriffen und in einen Auffangbehälter eingetragen. In dem Auffangbehälter befinden sich 60 g Diisopropylamin in 250 g Wasser.

Nach Beendigung des Spritzvorgangs wird der modifizierte "Overspray" auf einen Festkörpergehalt von 30 % mit Wasser verdünnt.

Das wiedergewonnene Bindemittel wird als 1-Komponenten-Polyurethansystem appliziert und 30 Minuten bei 160°C eingebrannt. Man erhält einen klaren, vernetzten, lösemittelbeständigen Lackfilm.

## Patentansprüche

1. Verfahren zur Wiederverwertung des beim Verspritzen von wasserverdünnbaren 2-Komponenten-Polyurethanlacken auf Basis von organischen Polyisocyanaten und von organischen Polyhydroxylverbindungen anfallenden "Overspray", dadurch gekennzeichnet, daß man
(i) den "Overspray", gegebenenfalls unter gleichzeitiger Verdünnung mit Wasser sammelt,
(ii) den "Overspray" gleichzeitig oder im Anschluß an die Verfahrensstufe (i), gegebenenfalls unter Mitverwendung von Emulgatoren, mit einer solchen Menge an Verbindungen zur Reaktion bringt, welche gegenüber Isocyanatgruppen eine höhere Reaktivität aufweisen als Wasser und als die in den 2-Komponenten-Polyurethanlacken mitverwendeten Polyhydroxylverbindungen, die einem Äquivalentverhältnis von gegenüber Isocyanatgruppen im Sinne dieser Ausführungen hochreaktiven Gruppen zu Isocyanatgruppen des "Overspray" von 0,5 : 1 bis 50 : 1 entsprechen, und
(iii) die so erhaltene wässrige Lösung oder Dispersion des chemisch modifizierten "Overspray", gegebenenfalls nach Entfernung eines Teils des Wassers oder Zugabe von weiterem Wasser zwecks Einstellung auf Spritzviskosität und gegebenenfalls nach Zusatz von weiteren Hilfs- und Zusatzmitteln, als ein- oder mehrkomponentig chemisch und/oder physikalisch trocknendes Beschichtungsmittel oder Teil eines derartigen Beschichtungsmittels wiederverwendet.

2. Verfahren nach Anspruch 1, dadurch gekennzeichnet, daß man in der Verfahrensstufe (ii) als gegenüber Isocyanatgruppen reaktionsfähige Verbindungen primäre oder sekundäre Monoamine mit aliphatisch gebundenen Aminogruppen verwendet.

3. Verfahren gemäß Anspruch 1, dadurch gekennzeichnet, daß man in der Verfahrensstufe (ii) als gegenüber Isocyanatgruppen reaktionsfähige Verbindungen Aminoalkohole verwendet.

4. Verfahren gemäß Anspruch 1, dadurch gekennzeichnet, daß man in der Verfahrensstufe (ii) als gegenüber Isocyanatgruppen reaktionsfähige Verbindungen Amine mit einer Carboxylat- oder Sulfonatgruppe verwendet.

5. Verfahren gemäß Anspruch 1, dadurch gekennzeichnet, dasß man in der Verfahrensstufe (ii) als gegenüber Isocyanatgruppen reaktionsfähigen Verbindungen Oxime verwendet.

6. Verfahren gemäß Anspruch 1 bis 4, dadurch gekennzeichnet, daß man in Verfahrensstufe (iii) den in Wasser gelösten oder dispergierten, chemisch modifizierten "Overspray" als Polyhydroxylkomponente oder Teil der Polyhydroxylkomponente von wasserverdünnbaren 2-Komponenten-Polyurethanlacken wiederverwendet.

7. Verfahren gemäß Anspruch 1 bis 5, dadurch gekennzeichnet, daß man in der Verfahrensstufe (iii) den in Wasser gelösten oder dispergierten, chemisch modifizierten "Overspray", gegebenenfalls unter Zusatz von Vernetzerharzen, als unter dem Einfluß von Hitze vernetzbare, wasserverdünnbare Einkomponentenlack oder als Bestandteil eines derartigen Lackes wiederverwendet.

## Claims

1. Process for the reutilisation of the overspray occurring on spraying water-borne, 2-component polyurethane lacquers based on organic polyisocyanates and organic polyhydroxyl compounds, characterised in that
(i) the overspray is collected, optionally with concomitant dilution with water,
(ii) simultaneously with or after process stage (i), the overspray is reacted, optionally in the presence of emulsifiers, with such a quantity of compounds which have a higher reactivity towards isocyanate groups than water and than the polyhydroxyl compounds used in the 2-component polyurethane lacquers, as corresponds to an equivalent ratio of highly reactive groups as defined in these explanations to isocyanate groups of the overspray of 0.5:1 to 50:1, and
(iii) the resultant aqueous solution or dispersion of the chemically modified overspray is reused as a 1-component or multi-component chemically and/or physically drying coating composition or as part of such a coating composition, optionally after removal of part of the water or addition of further water in order to establish the spraying viscosity and optionally after the addition of further auxiliary substances and additives.

2. Process according to claim 1, characterised in that primary or secondary monoamines with aliphatically attached amino groups are used in process stage (ii) as compounds capable of reacting with isocyanate groups.

3. Process according to claim 1, characterised in that aminoalcohols are used in process stage (ii) as compounds capable of reacting with isocyanate groups.

4. Process according to claim 1, characterised in that amines with a carboxylate or sulphonate group are used in process stage (ii) as compounds capable of reacting with isocyanate groups.

5. Process according to claim 1, characterised in that oximes are used in process stage (ii) as compounds capable of reacting with isocyanate groups.

6. Process according claims 1 to 4, characterised in that the chemically modified overspray dissolved or dispersed in water is reused in process stage (iii) as the polyhydroxyl component or part of the polyhydroxyl component of water-borne, 2-component polyurethane lacquers.

7. Process according to claims 1 to 5, characterised in that the chemically modified overspray dissolved or dispersed in water is reused in process stage (iii), optionally with the addition of crosslinking resins, as a heat-curable, 1-component lacquer or as a constituent of such a lacquer.

## Revendications

1. Procédé pour récupérer les pertes de pulvérisation à l'application par pulvérisation de vernis de polyuréthanes à deux composants, diluables à l'eau, à base de polyisocyanates organiques et de composés organiques polyhydroxylés, caractérisé en ce que
(i) on recueille les "pertes de pulvérisation", le cas échéant en les diluant simultanément par de l'eau,
(ii) dans le cours du stade opératoire (i) ou à la suite du stade opératoire (i), on fait réagir les "pertes de pulvérisation", le cas échéant avec utilisation conjointe d'agents émulsionnants, avec des composés ayant, à l'égard des groupes isocyanates, une réactivité supérieure à celle de l'eau et à celle des composés polyhydroxylés existant dans les vernis de polyuréthane à deux composants, en quantités correspondant à un rapport de 0,5:1 à 50:1 entre les équivalents de groupes à haute réactivité à l'égard des groupes isocyanates, dans le sens des explications qu'on vient de donner, et les équivalents de groupes isocyanates des pertes de pulvérisation, et
(iii) On réutilise en tant que produit de revêtement à un ou plusieurs composants, à séchage chimique et/ou physique, ou en tant que partie d'un tel produit de revêtement la solution ou dispersion aqueuse ainsi obtenue des "pertes de pulvérisation" modifiées chimiquement, le cas échéant après élimination d'une partie de l'eau ou après addition de compléments d'eau pour réglage à la viscosité voulue pour la pulvérisation et le cas échéant après addition d'autres produits auxiliaires et additifs.

2. Procédé selon la revendication 1, caractérisé en ce que, au stade opératoire(ii) on utilise en tant que composés réactifs à l'égard des groupes isocyanates des monoamines primaires ou secondaires à groupes amino à liaisons aliphatiques.

3. Procédé selon la revendication 1, caractérisé en ce que, au stade opératoire (ii) on utilise en tant que composés réactifs à l'égard des groupes isocyanates des aminoalcools.

4. Procédé selon la revendication 1, caractérisé en ce que, au stade operatoire (ii) on utilise en tant que composés réactifs à l'égard des groupes isocyanates, des amines contenant un groupe carboxylate ou sulfonate.

5. Procédé selon la revendication 1, caractérisé en ce que, au stade operatoire (ii), on utilise en tant que composés réactifs à l'égard des groupes isocyanates des oximes.

6. Procédé selon les revendications 1 à 4, caractérisé en ce que, au stade opératoire (iii), on réutilise les pertes de pulvérisation modifiées chimiquement, en solution ou dispersion dans l'eau, en tant que composant polyhydroxylé ou partie d'un composant polyhydroxylé de vernis de polyuréthane à deux composants diluables à l'eau.

7. Procédé selon les revendications 1 à 5, caractérisé en ce que, au stade opératoire (iii), on réutilise les pertes de pulvérisation modifiées chimiquement, à l'état de solution ou dispersion dans l'eau et le cas échéant avec adjonction de résines réticulantes, en tant que vernis à un composant diluables à l'eau et réticulables sous l'action de la chaleur ou en tant que constituants d'un tel vernis.
